# EUROPEAN PATENT APPLICATION

(11) **EP 4 636 885 A1**
(43) Date of publication of application: **22.10.2025**
(21) Application number: 25170990.3
(22) Date of filing: 16.04.2025
(51) Int. Cl.: H01M 10/04, H01M 50/107, H01M 50/46, H01M 50/463

(54) **SEPARATOR FOR RECHARGEABLE BATTERY AND ELECTRODE ASSEMBLY INCLUDING THE SAME**

(30) Priority: 19.04.2024 KR 20240052992
(71) Applicant: SAMSUNG SDI CO., LTD., Yongin-si, Gyeonggi-do 17084 (KR)
(72) Inventor: KIM, Dae-Sup, 17084 Yongin-si, Gyeonggi-do (KR)
(74) Representative: Gulde & Partner

(57) **Abstract**

A separator for a rechargeable battery includes a base, a first side protruding portion formed in a first side of the base and protruding in a first direction, and a second side protruding portion formed in a second side of the base and protruding in a second direction. The first side of the base and the second side of the base are opposite to each other, and the first direction and the second direction are opposite to each other with respect to the base.

## Description

### BACKGROUND OF THE DISCLOSURE

### (a) Field of the Disclosure

The present disclosure relates to a separator for a rechargeable battery, and an electrode assembly including the separator.

### (b) Description of the Related Art

With technological development and demand for mobile devices, demand for rechargeable batteries as an energy source is increasing.

Among the rechargeable batteries, a cylindrical rechargeable battery typically includes an electrode assembly formed by placing electrodes on both sides of a separator, and winding into a jelly roll shape, a center pin placed in a hollow portion at a center of the electrode assembly, a case accommodating the electrode assembly, and a cap assembly closing and sealing an open side of the case.

The electrode assembly has a structure in which a positive electrode, a separator, and a negative electrode are repeatedly wound or repeatedly stacked, and misalignment may occur due to the phenomenon of being pushed during the repeated stacking process.

When the misalignment occurs, a short circuit may occur between the negative electrode and the positive electrode of different polarities.

### SUMMARY OF THE DISCLOSURE

Therefore, the present disclosure provides a separator for a rechargeable battery that reduces or prevents misalignment from occurring due to slipping and the like, and an electrode assembly including the separator.

A first aspect of the present disclosure relates to a separator for a rechargeable battery. The separator includes a base, a first side protruding portion formed in a first side of the base and protruding in a first direction and a second side protruding portion formed in a second side of the base and protruding in a second direction, wherein the first side of the base and the second side of the base are opposite to each other, and the first direction and the second direction are opposite to each other with respect to the base.

The first side protruding portion and the second side protruding portion may be spaced apart from each other and are parallel, or the first side protruding portion and the second side protruding portion may each be formed continuously along the first side or the second of the base.

The first side protruding portion and second side protruding portion may each be formed discontinuously along the first side or the second of the base.

Side walls of the first side protruding portion and the second side protruding portion may form an angle of less than 90 degrees with one surface of the base.

The first side protruding portion and the second side protruding portion may each independently protrude up to a height of (about) 50 µm to (about) 200 µm.

The first side protruding portion and the second side protruding portion each may each independently have a width of (about) 0.3 mm to (about) 1.0 mm.

Another aspect of the present disclosure relates to an electrode assembly, which includes a first electrode that includes a first substrate and a first active material layer formed in the first substrate, a second electrode that includes a second substrate and a second active material layer formed in the second substrate, and a separator according to the first aspect of the disclosure placed between the first electrode and the second electrode. The separator includes a first side protruding portion that protrudes from a first side of the base of the separator toward the first electrode, and a second side protruding portion that protrudes from a second side of the base of the separator toward the second electrode.

The first side protruding portion and the second side protruding portion may each independently protrude up to a height of (about) 50 µm to (about) 200 µm, respectively.

The first side protruding portion and the second side protruding portion may each independently have a width of (about) 0.3 mm to (about) 1.0 mm.

A width of the first electrode and a width of the second electrode are greater than a width of the separator so that a portion of the first electrode and a portion of the second electrode protrude outside the separator.

The first electrode further includes a first uncoated region of the first substrate in which the first active material layer is uncoated so that the first substrate is exposed, the second electrode further includes a second uncoated region of the second substrate in which the second active material layer is uncoated so that the second substrate is exposed, and the first uncoated region of the first electrode protrudes from the second side of the separator, and the second uncoated region of the second electrode protrudes from the first side of the separator.

The first side protruding portion of the separator supports a first side edge of the first electrode, and the second side protruding portion of the separator supports a second side edge of the second electrode.

A third aspect of the present disclosure relates to a rechargeable battery, which includes the electrode assembly of the aforementioned aspect, a case accommodating the electrode assembly, a first electrode tab connected to the first electrode of the electrode assembly, and a second electrode tab connected to the second electrode of the electrode assembly.

The first electrode further includes a first uncoated region of the first substrate in which the first active material layer is uncoated so that the first substrate is exposed, the second electrode further includes a second uncoated region of the second substrate in which the second active material layer is uncoated so that the second substrate is exposed, the first uncoated region of the first electrode protrudes from the second side of the separator, and the second uncoated region of the second electrode protrudes from the first side of the separator, and the first electrode tab is connected to the first uncoated region protruding from the first side of the separator, and the second electrode tab is connected to the second uncoated region protruding from the first side of the separator.

When using the separator according to the example embodiment, productivity can be improved because misalignment due to slipping and the like is reduced or does not occur.

### BRIEF DESCRIPTION OF THE DRAWINGS

FIG. 1 is a schematic perspective view of a rechargeable battery according to an example embodiment.
FIG. 2 is a longitudinal cross-sectional view of the rechargeable battery illustrated in FIG. 1.
FIG. 3 is a top plan view of the separator according to an example embodiment.
FIG. 4 is a cross-sectional view of FIG. 3, taken along the line IV-IV.
FIG. 5 is a top plan view of a separator according to another example embodiment.
FIG. 6 is an enlarged view of the cap assembly in the rechargeable battery illustrated in FIG. 2.

### DETAILED DESCRIPTION

Hereinafter, examples of the present disclosure will be described more fully hereinafter with reference to the accompanying drawings, in which example embodiments of the disclosure are shown. As those skilled in the art would realize, the described example embodiments may be modified in various different ways.

The size and thickness of each component shown in the drawing are arbitrarily shown for better understanding and ease of description, and therefore the present disclosure is not necessarily limited to what is shown.

In the drawings, the thickness of layers, films, panels, regions, and the like may be exaggerated for clarity. In addition, in drawing, the thickness of some layers and regions may be exaggerated for better understanding and ease of description. It will be understood that when an element such as a layer, film, region, or substrate is referred to as being "on" another element, the element can be directly on the other element or intervening elements may also be present.

In addition, unless explicitly described to the contrary, the word "comprise," and variations such as "comprises" or "comprising," will be understood to imply the inclusion of stated elements but not the exclusion of any other elements.

When the terms "about" or "substantially" are used in this specification in connection with a numerical value, it is intended that the associated numerical value include a tolerance of ±10% around the stated numerical value. The expression "up to" includes amounts of zero to the expressed upper limit and all values therebetween. When ranges are specified, the range includes all values therebetween such as increments of 0.1%.

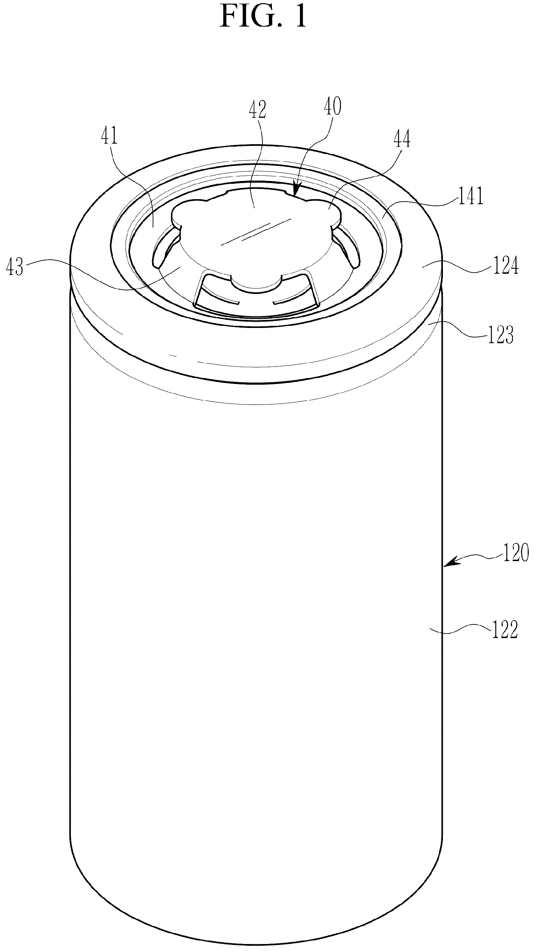

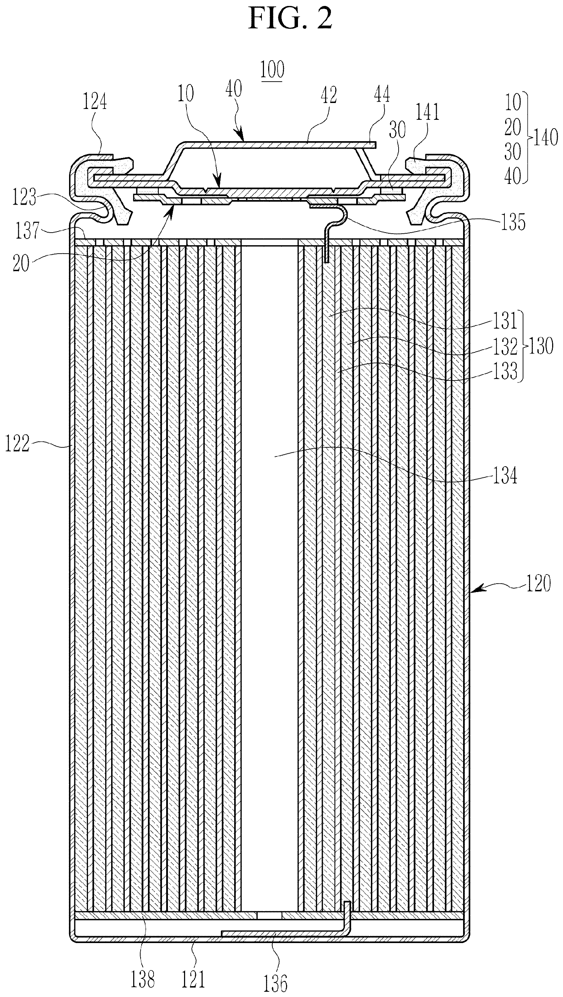

FIG. 1 is a schematic perspective view of a rechargeable battery according to an example embodiment, and FIG. 2 is a longitudinal cross-sectional view of the rechargeable battery shown in FIG. 1.

As shown in FIG. 1 and FIG. 2, a rechargeable battery 100 according to an example embodiment includes a case 120, an electrode assembly 130 accommodated in the case 120, and a cap assembly 140 that is assembled in the case 120 and that seals the case 120. The cap assembly 140 includes a safety vent 10 that reduces or prevents explosion of the rechargeable battery 100, and a cap up 40 that covers the safety vent 10.

The electrode assembly 130 includes a first electrode 131, a separator 133, and a second electrode 132 that are stacked, e.g., sequentially stacked over one another. The electrode assembly 130 may be formed in the shape of a cylindrical jelly roll formed by stacking the first electrode 131, the separator 133, and the second electrode 132, and subsequently wound.

The first electrode 131 includes a first substrate and a first active material layer formed on the first substrate, and the first electrode 131 may be or include a positive electrode.

The first substrate is formed of or include a thin conductive metal plate, for example, aluminum, and may be or include a current collector.

As a positive active material forming the first active material layer, a compound (lithiated intercalation compound) capable of reversible intercalation and deintercalation of lithium may be used. For example, one or more types of composite oxide of metal and lithium such as or including at least one of cobalt, manganese, nickel, and combinations thereof may be used. The content of positive active material may be 90 % weight to 98 wt% with respect to the entire weight of the positive active material layer.

The positive active material may further include a binder and a conductive material. In this case, the content of binder and conductive material may be 1 wt% to 5 wt%, respectively, with respect to the entire weight of the positive active material layer.

The binder is configured to attach positive active material particles to each other, and to attach a positive active material to a substrate, which is a current collector. Representative examples of binders include at least one of polyvinylalcohol, carboxylmethylcellulose, hydroxypropylcellulose, diacetylcellulose, diacetylcellulose, polyvinylchloride, carboxylated polyvinylchloride, polyvinylfluoride, polymers including ethylene oxide, polyvinylpyrrolidone, polyurethane, polytetrafluoroethylene, polyvinylidene fluoride, polyethylene, polypropylene, and styrene butadiene rubber, acryl Rated styrene butadiene rubber, epoxy resin, nylon, and the like, but is not limited thereto. Conductive materials are configured to provide conductivity to electrodes, and in a battery being constructed, any electron conductive material may be used as long as the electron conductive material does not cause chemical changes to the battery.

The first substrate includes a first active portion in which the first active material layer is formed, and a first uncoated region in which the first active material layer is not formed or uncoated, and thus the first substrate is exposed, and a first electrode tab may be connected to the first uncoated region. The first electrode tab may be a positive electrode tab 135.

The positive electrode tab 135 may be made of the or include same or similar material as the substrate, for example, aluminum.

The second substrate includes a second active portion in which the second active material layer is formed, and a second uncoated region in which the second active material layer is not formed or uncoated, and thus the second substrate is exposed, and a second negative electrode tab may be connected to the second uncoated region. The second negative electrode tab may be a negative electrode tab 136.

The second electrode 132 is a negative electrode, and the second substrate is formed of or include a thin conductive metal plate and may be or include a current collector. The second substrate may be or include, for example, copper (Cu).

The negative active material of the second active material layer may be or include a carbon-based active material. The carbon-based negative active material may be or include artificial graphite or a mixture of artificial graphite and natural graphite. When using artificial graphite or a crystalline carbon-based material that is a mixture of artificial graphite and natural graphite as a negative active material, the crystallographic characteristics of the particles are more developed than when using amorphous carbon-based active material, and thus there may be an advantage in further improving the orientation characteristics of the carbon material within the electrode plate for the external magnetic field. The form of the artificial graphite or natural graphite may be at least amorphous, plate-shaped, flake-shaped, spherical shape, fiber-shaped, or a combination thereof. In an example, when using a mixture of the artificial graphite and natural graphite, the mixing ratio may be 70:30 wt% to 95:5 wt%.

In examples, the negative active material layer may further include at least one of an Si-based negative active material, an Sn-based negative active material, or a LiMOx (M = metal)-based negative active material. When the negative active material layer further includes any of the above compounds, that is, when the negative active material layer includes the carbon-based negative active material as a first negative active material and the negative active material as a second negative active material, the mixing ratio of the first negative active material and the second negative active material may have a weight ratio of 50:50 to 99:1.

The LiMOx (M = metal)-based negative active material may be or include a lithium vanadium oxide.

The Si-based negative active material may include Si, an Si-C composite, SiOₓ (0 < x < 2), an Si-Q alloy (Q is an element including at least one of an alkali metal, an alkaline-earth metal, a group 13 element, a group 14 element, a group 15 elements, a group 16 element, a transition metal, a rare earth element, and a combination thereof, but not Si), the Sn-based negative active material may include Sn, SnO₂, an Sn-R alloy (R is an element including at least one of an alkali metal, an alkaline-earth metal, a group 13 element, a group 14 element, a group 15 element, a group 16 element, a transition metal, a rare earth element, and a combination thereof, but not Sn), and the like, and may be or include a mixture of at least one of the above compounds with SiO₂ may also be used. As the elements Q and R, at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof may be used.

The content of negative active material in the negative active material layer may be 95 wt% to 99 wt% with respect to the entire weight of the negative active material layer.

The negative active material includes a binder and may further include a selectively conductive material. The binder content in the negative active material may be 1 wt% to 5 wt% based on the entire weight of the negative active material. In addition, when an additional conductive material is included, a negative active material may be used at 90 wt% to 98 wt%, a binder at 1 wt% to 5 wt%, and a conductive material at 1 wt% to 5 wt%.

The binder is configured to adhere the negative active material particles to each other, and to adhere the negative active material to the negative electrode substrate. As the binder, a non-aqueous binder, an aqueous binder, or a combination thereof may be used.

The non-aqueous binder may include at least one of polyvinylchloride, carboxylated polyvinylchloride, polyvinylfluoride, polymer containing ethylene oxide, polyvinylpyrrolidone, polyurethane, polytetrafluoroethylene, polyvinylidene fluoride, polyethylene, polypropylene, polyamideimide, polyimide, or a combination thereof.

The water-based binder may include at least one of styrene-butadiene rubber, acrylated styrene-butadiene rubber (SBR), acrylo nitrile-butadiene rubber, acryl rubber, butyl rubber, ethylenepropylene copolymer, polyeperohydrin, polyphosphazene, polyacrylonitrile, and polystyrene, ethylenepropylenediene copolymer. Examples include at least one of polyvinylpyridine, chlorosulfonated polyethylene, latex, polyesterresin, acrylresin, phenolresin, epoxy resin, polyvinylalcohol, acrylate-based resin, or a combination thereof.

When using a water-based binder as the negative electrode binder, a cellulose-based compound that can impart viscosity may be further included as a thickener. The cellulose-based compound may be used by mixing one or more types of carboxylmethyl cellulose, hydroxypropylmethyl cellulose, methyl cellulose, or alkali metal salt thereof. At least one of Na, K, or Li may be the alkali metal. The amount of the thickener may be 0.1 parts by weight to 3 parts by weight with respect to 100 parts by weight of the negative active material.

The conductive material is configured to provide conductivity to the electrode, and in the battery being constructed, any electron conductive material can be used as long as the electron conductive material does not cause chemical changes to the battery. As an example of the conductive material, a carbon-based material such as, e.g., at least one of natural graphite, artificial graphite, carbon black, acetylene black, Ketjen black, and carbon fiber; a metallic material such as metal powder such as at least one of copper, nickel, aluminum, silver, and the like or metal fiber; a conductive polymer such as a polyphenylene derivative and the like; or a mixture thereof may be used.

In examples, a Brunauer, Emmett and Teller (BET) specific surface area of the negative active material layer may be less than 3.0 m²/g and may also be 0.6 m²/g to 1.2 m²/g. When the BET specific surface area of the negative active material layer is less than 3.0 m²/g, there may be an advantage in improving the electrochemical lifespan characteristics of the cell.

The BET measurement is performed by charging and discharging the lithium rechargeable battery including the negative electrode, cutting the negative electrode obtained by dismantling the fully discharged battery into a certain size, and placing the cut negative electrode in a BET sample holder, and measuring using a nitrogen gas adsorption method.

The negative electrode may have a cross-section loading level (L/L) of 6 mg/cm² to 65 mg/cm².

The separator 133 is placed between the first electrode 131 and the second electrode 132 and insulates them, and may be formed of or include at least one of polyethylene, polypropylene, polyvinylidene fluoride, or a multilayer of two or more layers thereof, and mixed multilayers such as a two-layer separator of polyethylene/polypropylene, a three-layer separator of polyethylenepolypropylene/polyethylene or polypropylene/polyethylene/polypropylene, and the like may be used.

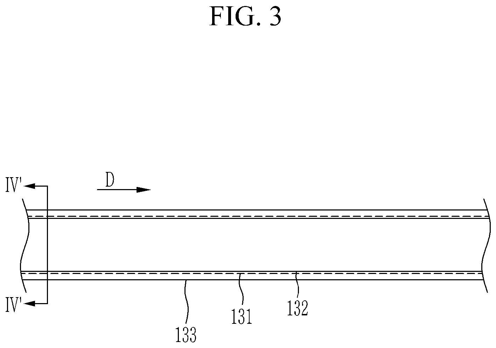

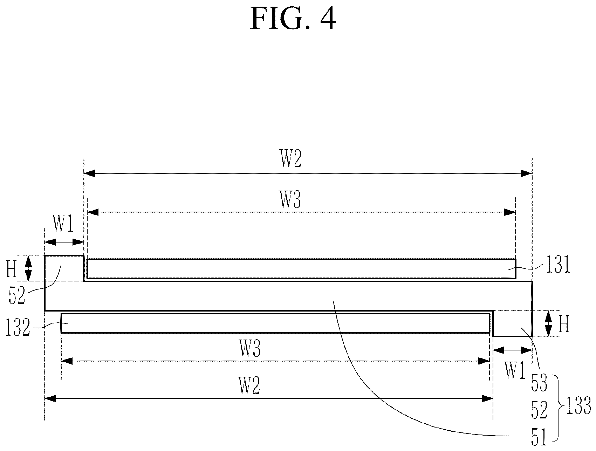

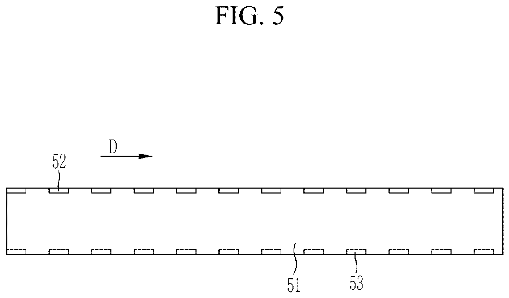

FIG. 3 is a top plan view of the separator according to an example embodiment, FIG. 4 is a cross-sectional view of FIG. 3, taken along the line IV-IV, and FIG. 5 is a top plan view of a separator according to another example embodiment.

Referring to Figs. 3 to 5, the separator 133 includes a base 51 which is in the form of a sheet with a constant thickness and protruding portions 52 and 53 disposed at an edge of the base 51 and protruded in opposite directions from the base 51.

The protruding portions 52 and 53 include a first side protruding portion 52 and a second side protruding portion 53. The first side protruding portion 52 may be an upper protruding portion and the second side protruding portion 53 may be a lower protruding portion.

The first protruding portion 52 formed on a first edge of the separator 133 and the second protruding portion 53 formed on a second edge of the separator 133. The first edge of the separator 133 may be an upper edge of the separator 133 and the second edge of the separator 133 may be a lower edge of the separator 133. the first side protruding portion 52 and the second side protruding portion 53 protrude in different directions.

The first side protruding portion 52 is formed in a first side of the base 51 and protruding in a first direction, and the second side protruding portion 53 is formed in a second side of the base 51 and protruding in a second direction, and the first direction and the second direction are opposite directions with respect to the base 51.

A width W1 of the protruding portions 52 and 53 may be 0.3 mm to 1.0 mm, and the protruding portions 52 and 53 may protrude up to a protruded height H of 50 µm to 200 µm from one side of the separator 133. Preferably, the width W1 of the protruding portions 52 and 53 may be 0.5 mm to 0.9 mm, and the protruding portions 52 and 53 may protrude up to a protruded height H of 100 µm to 150 µm from one side of the separator 133.

The protruding portions 52 and 53 may be formed, e.g. sequentially formed, along the wound direction, but are not limited to this configuration, and may be discontinuously formed as shown in FIG. 5.

A width W2 of the base 51 excluding the first side protruding portion 52 or the second side protruding portion 53 may be greater than a width W3 of a first electrode 131 or second electrode 132. Therefore, the first electrode 131 and the second electrode 132 that protrude out of the separator 133 are may not be short-circuited with each other.

Meanwhile, when the protruding portions 52 and 53 are formed as in an example embodiment, when the first electrode 131, the separator 133, and the second electrode 132 are stacked, the first electrode 131 and the second electrode 132 may align in plate without being deviated from the separator 133, thereby reducing or preventing misalignment.

That is, the first electrode 131 and the second electrode 132 may slip and escape out of the separator during the stacking process, but in an example embodiment, the protruding portions 52 and 53 are formed like a barrier such that the first electrode 131 and the second electrode 132 can be reduced or prevented from slipping and protruding to the outside.

Therefore, an angle formed between side walls of protruding portions 52 and 53 with one surface of the separator may be less than or equal to (about) 90 degrees, preferably be (significantly) less than 90 degrees, more preferably 80 degree to 89 degree. If the angle is less than or equal to 90 degrees, slipping and misalignment of the first electrode 131 and the second electrode 132 can be prevented or reduced. Within the preferred range of less than 90 degrees, more preferably 80 degree to 89 degree the aforementioned misalignment can be reduced or prevented and the stacking of the separator 133, first electrode 131 and second electrode 132 may further be sufficiently smooth in the manufacturing process.

In addition, when inserting the electrode assembly into the case, electrodes of the electrode assembly are held by the separator as in examples of the present disclosure, and thus positions of the positive and negative electrodes are not distorted while the electrode assembly is inserted, thereby improving safety.

Meanwhile, in an example embodiment, the widths of the first electrode 131, the second electrode 132, and the separator 133 can be changed variously. For example, in an example embodiment, although not shown in FIG. 4, the width W3 of the first electrode 131 or the second electrode 132 may be greater than the width of the separator 133. It may be suitable for forming a large cell having a relatively large electrode assembly size.

Specifically, the width W3 of the first electrode 131 and the width W3 of the second electrode 132 may be greater than the width W2 of the base 51 excluding the first side protruding portion 52 or the second side protruding portion 53, and accordingly, a portion of the first electrode 131 and a portion of the second electrode 132 may protrude outside the separator 133 in an up-down direction.

The first electrode 131 may include the first uncoated region of the first substrate in which the first active material layer is uncoated so that the first substrate is exposed, and the second electrode may include the second uncoated region of the second substrate in which the second active material layer is uncoated so that the second substrate is exposed.
the first uncoated region of the first electrode 131 may protrude and be exposed downward from the separator 133, and the second uncoated region of the second electrode 132 may protrude and be exposed upward from the separator 133.

The first side protruding portion 52 of the separator 133 may support a first side edge of the first electrode 131 toward the second edge of the separator 133, and the second side protruding portion 53 of the separator 133 may support a second side edge of the second electrode 132 toward the first edge of the separator 133. The first edge of the first electrode 131 may be an upper edge of the first electrode 131, and the second edge of the second electrode 132 may be a lower edge of the second electrode 132.

In this example embodiment, only the first electrode 131 may be exposed downward from the separator 133, and only the second electrode 132 may be exposed upward from the separator 133, so a short circuit between the first electrode 131 and the second electrode 132 may be inhibited or prevented.

In addition, the first side protruding portion 52 may inhibit the first electrode 131 from slipping upward from the separator 133, and the second side protruding portion 53 may inhibit the second electrode 132 from slipping downward from the separator 133.

Referring back to FIG. 1 and 2, since the electrode assembly 130 is wound around the center pin 134, the center pin 134 is positioned at the center of the electrode assembly 130 and can be arranged parallel to the direction in which the electrode assembly 130 is inserted into the case 120.

The center pin 134 is designed to reduce or minimize deformation, or substantially maintain a shape close to the shape before deformation when receiving an entire compressive load or local impact load acting from the outside of the rechargeable battery, and may be formed in the shape of a hollow circular pipe. In addition, the center pin 134 may constitute a passage for gas generated internally. In examples, the center pin 134 may be omitted.

The center pin 134 may be formed of or include a material with a given rigidity, for example, a metal with conductivity such as, e.g., at least one of steel, steel alloy, aluminum, aluminum alloy, and the like, in order to be minimally deformed against external impact. As described, since the center pin 134 has conductivity, a first insulating plate 137 is disposed between a cap assembly 40 and a top of the center pin 134, and a second insulating plate 138 is disposed between a bottom 121 of the case 120 and a lower end of the center pin 134, such that both ends of the center pin 134 remain insulated.

A through hole passing through the interior of the center pin 134, a through hole through which a positive electrode tab 135 passes, and a plurality of through holes through which electrolyte flows may be formed in the first insulating plate 137. A through hole through which the center pin 134 passes and a through hole through which a negative electrode tab 136 passes may be formed in the second insulating plate 138.

The case 120 has one side open such that the electrode assembly 130 can be inserted along with the electrolyte, and may be formed to have approximately the same or similar shape as the electrode assembly 130. The case 120 may include a circular bottom and a cylindrical side portion extending a given length from the bottom to the top. During the assembly process of the rechargeable battery, the top of the cylindrical case may be opened.

Therefore, during the assembly process of the rechargeable battery, the electrode assembly may be inserted into the cylindrical case, and the electrolyte solution may be injected into the cylindrical case. During the manufacturing process of the rechargeable battery 100, one side (upper side) of the case 120 may be open, and the electrode assembly 130 may be accommodated inside the case 120 together with the electrolyte. The case 120 may be formed of or include at least one of steel, steel alloy, aluminum, and an aluminum alloy.

The electrolyte allows lithium ions generated by electrochemical reaction to move between the first electrode 131 and the second electrode 132 inside the battery. The electrolyte solution may be formed of or include an organic solvent such as, e.g., at least one of, ethylene carbonate (EC), propylene carbonate (PC), diethyl carbonate (DEC), ethyl methyl carbonate (EMC), and EMC and lithium salts such as LiPF₆ and LiBF₄. Electrolytes may be or include liquid, solid, or gel-like.

A beading portion 123 and a crimping portion 124 may be disposed on a side portion 122 of the case 120.

The beading portion 123 is a portion deformed to be concave toward the inside of the case 120, and the crimping portion 124 is a portion deformed such that an edge of the side portion 122 is bent toward the inside. The motion of the electrode assembly 130 may be reduced or suppressed by the beading portion 123, and the cap assembly 140 may be fixed to the case 120 by the crimping portion 124.

The cap assembly 140 includes a safety vent 10 that reduces or prevents explosion of the rechargeable battery 100, and a cap up 40 that covers the safety vent 10.

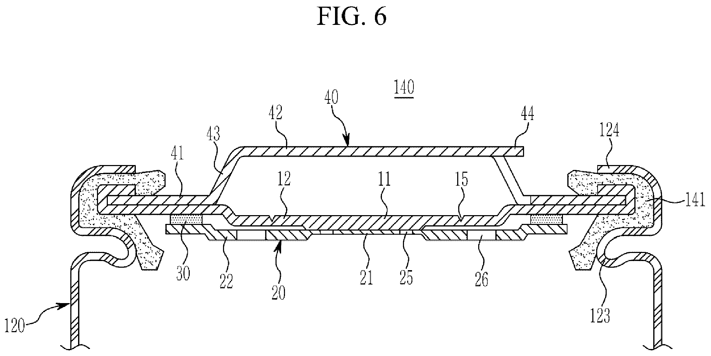

FIG. 6 is an enlarged view of the cap assembly 140 in the rechargeable battery illustrated in FIG. 2.

Referring to FIG. 2 and FIG. 6, the cap assembly 140 may include a safety vent 10 provided with a notch groove 15, a cap down 20 disposed in one side (lower side) of the safety vent 10, facing the electrode assembly 130, a ring-shaped insulating portion 30 disposed between the safety vent 10 and the cap down 20, and a cap up 40 disposed in one side (upper side) of the safety vent 10 opposite to the cap down 20. The safety vent 10 may be referred to as a current interruptive device (CID) member.

The safety vent 10 may include a central portion 11 and a peripheral portion 12 surrounding the central portion 11. A thickness of the central portion 11 may be greater than a thickness of the peripheral portion 12, and the notch groove 15 may be disposed in the peripheral portion 12.

The cap down 20 may include a central portion 21 and a peripheral portion 22 surrounding the central portion 21, and a thickness of the central portion 21 may be smaller than a thickness of the peripheral portion 22. At least one first opening 25 may be disposed in the central portion 21, and at least one second opening 26 may be disposed in the peripheral portion 22.

The central portion 11 of the safety vent 10 and the central portion 21 of the cap down 20 may be bonded as one piece by a method such as, e.g., welding, and the safety vent 10 and the cap down 20 may be disposed at a distance from each other in the remaining portions except for the central portions 11 and 21. The insulating portion 30 may be disposed between the safety vent 10 and the cap down 20 while surrounding the central portions 11 and 21. The insulating portion 30 may be integrally bonded with the safety vent 10 and the cap down 20 by a method such as, e.g., a fusion method.

Referring to FIG. 2 to FIG. 6, the positive electrode tab 135 of the electrode assembly 130 may be fixed to one side (bottom) of the cap down 20, and the cap down 20, the safety vent 10, and the cap up 40 may be positively charged. The positive electrode tab 135 may be bent such that one side of the cap down 20 faces the side to increase a contact area with the cap down 20.

The cap up 40 is protruded to the outside such that it may constitute a positive terminal that contacts an external device and flows current to the outside, and may have a flat surface.

The negative electrode tab 136 is connected to the second electrode uncoated region such that the negative electrode tab 136 protrudes in the opposite direction from the positive electrode tab 125, and may be fixed to the lower bottom surface of the case 120 by, e.g. welding. Therefore, the case 120 may be charged as a negative electrode, and the bottom 121 of the case 120 may constitute a negative terminal.

The above cap assembly 140 may be coupled to the side portion 122 of the case 120 via an insulating gasket 141. The insulating gasket 141 surrounds the edge of the safety vent 10 and the cap up 40, and may be compressed between the beading portion 123 and the crimping portion 124 of the case 120.

During the use of the rechargeable battery 100, gas may be generated inside the case 120 for various reasons, and the internal pressure of the rechargeable battery 100 may increase due to the presence of the gas.

When gas is generated, pressure may be applied, e.g., continuously applied, to the safety vent 10 through the first and second openings 25 and 26 of the cap down 20, and at a given pressure, the safety vent 10 is deformed toward the outside (or upper side) of the cap assembly 140, thereby causing the safety vent 10 and the cap down 20 to be separated from each other.

In this case, the central portion 21 of the cap down 20 breaks from the peripheral portion 22 and rises together with the safety vent 10 while attached to the central portion 11 of the safety vent 10.

The current flow is blocked due to the separation of the safety vent 10 and the cap down 20. Afterwards, when the pressure continues to rise, the safety vent 10 breaks around the notch groove 15, and the internal gas is discharged. The internal gas is discharged to the outside of the rechargeable battery 100 through an exhaust port formed in the cap up 40.

While this disclosure has been described in connection with what is presently considered to be practical example embodiments, it is to be understood that the disclosure is not limited to the disclosed example embodiments. On the contrary, this disclosure is intended to cover various modifications and equivalent arrangements included within the scope of the appended claims.

**Description of symbols:**

| | | | |
|---|---|---|---|
| 100: | rechargeable battery | 120: | case |
| 121: | bottom portion | 122: | side portion |
| 130: | electrode assembly | 131: | positive electrode |
| 132: | negative electrode | 133: | separator |
| 135: | positive electrode tab | 136: | negative electrode tab |
| 140: | cap assembly | 10: | safety vent |
| 20: | cap down | 11, 21: | central portion |
| 12, 22: | peripheral portion | 30: | insulating portion |
| 40, 41, 42, 43, 44: | cap up | 51: | base |
| 52: | first side protruding portion | 53: | second side protruding portion |

## Claims

1. A separator (133) for a rechargeable battery (100), the separator (133) comprising:
a base (51);
a first side protruding portion (52) formed in a first side of the base (51) and protruding in a first direction; and
a second side protruding portion (53) formed in a second side of the base (51) and protruding in a second direction,
wherein the first side of the base and the second side of the base are opposite to each other, and the first direction and the second direction are opposite to each other with respect to the base (51).

2. The separator (133) for the rechargeable battery (100) of claim 1, wherein:
the first side protruding portion (52) and the second side protruding portion (53) are spaced apart from each other and are parallel.

3. The separator (133) for the rechargeable battery (100) of claim 2, wherein:
the first side protruding portion (52) and the second side protruding portion (53) are each formed continuously along the first side or the second side of the base (51).

4. The separator (133) for the rechargeable battery (100) of claim 2, wherein:
the first side protruding portion (52) and second side protruding portion (53) are each formed discontinuously along the first side or the second side of the base (51).

5. The separator (133) for the rechargeable battery (100) of one of the preceding claims, wherein:
side walls of at least one of the first side protruding portion (52) and the second side protruding portion (53) form an angle with one surface of the base (51) that is less than 90 degrees.

6. The separator (133) for the rechargeable battery (100) of one of the preceding claims, wherein:
the first side protruding portion (52) and the second side protruding portion (53) each independently protrude to a height (H) of 50 µm to 200 µm.

7. The separator (133) for the rechargeable battery (100) of one of the preceding claims, wherein:
the first side protruding portion (52) and the second side protruding portion (53) each independently have a width (W1) of 0.3 mm to 1.0 mm.

8. An electrode assembly (130) comprising:
a first electrode (131) that includes a first substrate and a first active material layer formed in the first substrate;
a second electrode (132) that includes a second substrate and a second active material layer formed in the second substrate; and
the separator (133) according to claim 1 placed between the first electrode (131) and the second electrode (132),
wherein the separator (133) includes the first side protruding portion (52) that protrudes from the first side of the base (51) of the separator toward the first electrode (131), and a second side protruding portion (53) that protrudes from the second side of the base (51) of the separator toward the second electrode (132).

9. The electrode assembly (130) of claim 8, wherein:
the first side protruding portion (52) and the second side protruding portion (53) each independently protrude to a height (H) of 50 µm to 200 µm.

10. The electrode assembly (130) of one of claims 8 or 9, wherein:
the first side protruding portion (52) and the second side protruding portion (53) each independently have a width (W1) of 0.3 mm to 1.0 mm.

11. The electrode assembly (130) of one of claims 8 to 10, wherein:
a width of the first electrode (131) and a width of the second electrode (132) are greater than a width of the separator (133) so that a portion of the first electrode (131) and a portion of the second electrode (132) protrude outside the separator (133).

12. The electrode assembly (130) of one of claims 8 to 11, wherein:
the first electrode (131) further includes a first uncoated region of the first substrate in which the first active material layer is uncoated so that the first substrate is exposed,
the second electrode (132) further includes a second uncoated region of the second substrate in which the second active material layer is uncoated so that the second substrate is exposed, and
the first uncoated region of the first electrode (131) protrudes from the second side of the separator (133), and the second uncoated region of the second electrode (132) protrudes from the first side of the separator (133).

13. The electrode assembly (130) of one of claims 8 to 12, wherein:
the first side protruding portion (52) of the separator (133) supports a first side edge of the first electrode (131), and
the second side protruding portion (53) of the separator (133) supports a second side edge of the second electrode (132).

14. A rechargeable battery (100) comprising:
the electrode assembly (130) of one of claims 8 to 13;
a case (120) accommodating the electrode assembly (130);
a first electrode (131) tab connected to the first electrode (131) of the electrode assembly (130); and
a second electrode (132) tab connected to the second electrode (132) of the electrode assembly (130).

15. The rechargeable battery (100) of claim 14, wherein:
the first electrode (131) further includes a first uncoated region of the first substrate in which the first active material layer is uncoated so that the first substrate is exposed,
the second electrode (132) further includes a second uncoated region of the second substrate in which the second active material layer is uncoated so that the second substrate is exposed,
the first uncoated region of the first electrode (131) protrudes from the second side of the separator (133), and the second uncoated region of the second electrode (132) protrudes from the first side of the separator (133), and
the first electrode (131) tab is connected to the first uncoated region protruding from the second side of the separator (133), and the second electrode (132) tab is connected to the second uncoated region protruding from the first side of the separator (133),
